# FASCICULE DE BREVET EUROPEEN

(11) **EP 3 110 190 B1**
(45) Date de publication et mention de la délivrance du brevet: **02.11.2022**
(21) Numéro de dépôt: 16175640.8
(22) Date de dépôt: 22.06.2016
(51) Int. Cl.: H04W 12/06, G06Q 20/32, G06F 13/42, G06Q 20/04, G06Q 20/34, G06Q 20/38, H04W 4/80, H04W 12/30

(54) **PROCÉDÉ ET DISPOSITIF DE GESTION D'APPLICATIONS SANS CONTACT**
VERFAHREN UND VORRICHTUNG ZUR VERWALTUNG VON KONTAKTLOSEN ANWENDUNGEN
METHOD AND DEVICE FOR MANAGING CONTACTLESS APPLICATIONS

(30) Priorité: 26.06.2015 FR 1555982
(43) Date de publication de la demande: 28.12.2016
(73) Titulaire: Orange, 92130 Issy-les-Moulineaux (FR)
(72) Inventeur: LEVIONNAIS, Philippe, 14000 CAEN (FR); PETIT, Stéphane, 14200 HEROUVILLE SAINT CLAIR (FR)

(56) Documents cités:
- US-A1- 2003 167 207
- US-A1- 2014 279 528
- US-A1- 2014 304 094
- US-A1- 2015 039 494
- US-A1- 2015 081 461
- US-A1- 2015 095 219
- "Personalisierung von zweitem SE", RESEARCH DISCLOSURE, MASON PUBLICATIONS, HAMPSHIRE, GB, vol. 610, no. 27, 19 janvier 2015 (2015-01-19), page 1, XP007143836, ISSN: 0374-4353
- Sebastian Hans: "Report from F2F Berlin in March", ETSI Security week JUne 2015, 22 juin 2015 (2015-06-22), XP055270950, Extrait de l'Internet: URL:https://docbox.etsi.org/workshop/2015/ 201506_securityweek/m2m_thread/s01m2mfromo therorganisation/globalplatform_hans.pdf [extrait le 2016-05-06]

## Description

### Domaine technique

L'invention se rapporte de manière générale aux télécommunications, et plus précisément aux communications sans contact utilisant des technologies radio à courte distance, notamment de type NFC (Near Field - NF Communications).

Elle s'applique plus particulièrement à des terminaux équipés de ressources physiques et logicielles incluant un élément de sécurité et d'un module de communication en champ proche de type passif, apte à communiquer avec des terminaux externes de lecture.

### Etat de la technique

Les communications « NFC », basées principalement sur la norme ISO (International Standard Organisation) 14443, utilisent des technologies sans fil pour permettre un échange d'informations entre deux périphériques éloignés d'une courte distance, typiquement inférieure à dix centimètres.

Ces applications sans contact peuvent être, par exemple, relatives à des transactions électroniques dans le domaine des transports publics, ou bien également des applications d'identification, de contrôle d'accès, etc. Une communication NFC est établie entre deux entités sans contact, dites entités NFC, l'une opérant en tant que carte sans contact et l'autre opérant en tant que lecteur de carte sans contact. Une telle entité NFC est composée d'un dispositif de communication en champ proche, ou encore « composant NFC » par la suite, et d'une antenne associée qui lui permet de mettre en place une communication sans contact avec une autre entité NFC. L'entité NFC qui opère en tant que carte sans contact peut par exemple correspondre à une étiquette radio, en anglais « Tag NFC ». Une entité NFC qui opère en tant que lecteur de carte peut correspondre par exemple à un terminal de paiement électronique ou un équipement pour valider des tickets électroniques de transport ou encore un lecteur d'étiquettes adapté pour identifier des étiquettes radio, selon les applications considérées. La publication de demande de brevet US 2003/167207 A1 (Berardi et al.) décrit un porte-clés RFID capable de mettre-en-oeuvre des transactions financières.

Les fonctionnalités d'une entité sans contact peuvent être fournies par un terminal de téléphonie mobile, dit aussi terminal mobile. On entend par les termes 'terminal mobile' tout type de terminal qui peut être déplacé tout en restant connecté à un réseau de communication mobile. Il peut s'agir par exemple d'un téléphone mobile ou encore d'un ordinateur, d'une tablette électronique, etc.

Certaines applications requièrent un certain niveau de sécurité. Elles sont dans ce cas gérées conjointement par le terminal mobile et par l'élément de sécurité qui lui est associé. La partie non sensible de l'application (interface graphique, etc.) est chargée dans le terminal mobile. La partie sensible, qui nécessite une exécution et des données sécurisées, est téléchargée depuis le réseau mobile sous le contrôle d'un intermédiaire (aussi appelé TSM pour « Trusted Service Manager ») entre le fournisseur de services et le mobile du client, puis installée dans l'élément de sécurité associé au mobile, par exemple la carte d'identité d'abonné (SIM). Une communication peut être établie au sein du terminal entre l'application sans contact de la carte d'identité d'abonné et le dispositif sans contact. Puis le composant sans contact, installé sur le terminal mobile, permet un dialogue du terminal mobile, plus précisément de l'application concernée, avec une autre entité sans contact située à proximité du terminal. Certaines architectures de terminal mobile permettent ainsi de faire coopérer des fonctionnalités de téléphonie mobile et des fonctionnalités de type NFC (pour 'Near Field Communication' en anglais) de manière sécurisée.

Cependant ces terminaux mobiles sont coûteux et encombrants, réservés de ce fait à une certaine catégorie de personnes, excluant notamment les enfants.

D'autres architectures peu coûteuses à base de carte à puce (par exemple, les cartes de cantine pour les enfants) ont été proposées. Cependant ce système impose la présence d'un lecteur spécifique (de cartes à puces) pour charger une application ou les données correspondantes. Or ce type de lecteur est peu accessible aux particuliers. De plus ces cartes sont la plupart du temps mono-application (l'enfant possède une carte de transport et une carte de cantine).

Encore d'autres architectures peu coûteuses à base de simple transpondeur (étiquette NFC) ont été proposées pour embarquer plusieurs services (cantine, bibliothèque, etc.) mais dans ce contexte les services, non sécurisés, possèdent tous le même identifiant. Il ne s'agit donc pas réellement d'une architecture multi-applications.

Il existe donc un besoin pour que certaines catégories de personnes, notamment les enfants, dépourvues de téléphones mobiles évolués, puissent bénéficier néanmoins de plusieurs services sans contact sécurisés, comme par exemple le paiement des repas à la cantine, les tickets de bus et les abonnements à la bibliothèque, à l'aide d'un seul appareil simple et peu coûteux.

L'invention vient améliorer la situation.

### L'invention

L'invention est définie par les revendications indépendantes. Des modes de réalisation particuliers sont définis dans les revendications dépendantes. A cet effet, selon un aspect matériel, l'invention a pour objet un objet portable selon la revendication 1, apte à rendre au moins un service sécurisé en champ proche, comprenant :
∘ un module en champ proche comprenant une antenne et un microcontrôleur pour gérer une communication en champ proche avec une unité de lecture en champ proche externe à l'objet portable ;
∘ un élément de sécurité comprenant :
   ▪ des moyens de mémorisation pour la mémorisation d'applications et de données relatives à au moins un service sécurisé,
   ▪ un module de communication avec le module en champ proche pour l'échange de données relatives au service sécurisé,
   caractérisé en ce qu'il comporte aussi un module de communication série relié à l'élément de sécurité et en ce que les applications et les données du service sécurisé sont transmises à l'élément de sécurité par ledit module de communication série.

L'invention offre ainsi l'avantage d'assurer des communications NFC sécurisées à l'aide d'un objet très simple dans lequel les applications et les données relatives à un service sécurisé sont chargées non pas via le réseau de communications mobile, comme il est habituel de le faire, notamment sur un téléphone mobile, mais via une liaison série USB. Par service sécurisé, on entend un service donc l'exécution se fait sous le contrôle d'un élément de sécurité, de manière à ce que les données sensibles du service ne soient pas vulnérables.

Avantageusement, l'objet selon l'invention ne comporte donc rien d'autre qu'un composant NFC, un élément de sécurité et un connecteur série de type USB. Tous ces composants sont légers, peu coûteux et peu encombrants. On remarquera qu'il n'est pas nécessaire, selon cette architecture, de disposer d'un module pour la communication avec le réseau (module 3G, 4G, WiFi, etc.).

Le terme module peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.).

Selon un mode de mise en œuvre particulier de l'invention, un objet portable tel que décrit ci-dessus est en outre caractérisé en ce qu'il est dépourvu d'alimentation électrique interne à l'objet et de dispositif de stockage d'énergie.

Ce mode de mise en œuvre de l'invention permet de disposer d'un dispositif encore plus léger et plus simple, puisque ne nécessitant ni pile, ni batterie, ni quelconque source d'alimentation interne. En effet, l'absence de nécessité de module de communication radio permet de s'affranchir facilement de cette contrainte d'alimentation : un module de communication radio doit être alimenté pour fonctionner correctement, or l'objet portable selon l'invention n'en possède pas nécessairement. Cet affranchissement de l'alimentation permet de rendre l'objet portable plus léger, plus autonome et moins coûteux qu'un objet similaire qui comprendrait par exemple une batterie.

Selon une variante de ce premier mode de mise en œuvre, un objet portable tel que décrit ci-dessus est en outre caractérisé en ce qu'il est adapté à être alimenté électriquement uniquement lorsqu'il est connecté pour échanger des données avec un dispositif externe via son module de communication série.

Cette variante de mise en œuvre de l'invention permet d'alimenter l'objet portable tout en lui transmettant les données du service sécurisé, réalisant ainsi avantageusement deux fonctions simultanément (alimentation et chargement de l'application et des données sécurisées du service dans l'élément de sécurité), au contraire par exemple d'un smartphone NFC, qui est nécessairement alimenté par une batterie interne pendant qu'il charge l'application et les données depuis le réseau mobile via son module radio.

Selon une seconde variante de ce premier mode de mise en œuvre, qui pourra être mise en œuvre alternativement ou cumulativement avec la précédente, un objet portable tel que décrit ci-dessus est en outre caractérisé en ce qu'il est adapté à être alimenté en tension uniquement lorsqu'il est connecté pour échanger des données avec une unité de lecture en champ proche.

Cette variante de mise en œuvre de l'invention permet d'alimenter l'objet portable seulement lorsqu'il est nécessaire d'y lire des données pour les besoins de l'application (par exemple pour consommer un ticket de transport au niveau de la borne NFC), mais aussi avantageusement, dans certains cas, pour lui transmettre les données de l'application, par exemple lorsque la liaison USB ne peut pas être utilisée.

Selon un second mode de mise en œuvre particulier de l'invention, qui pourra être mis en œuvre alternativement ou cumulativement avec le précédent, un objet portable tel que décrit ci-dessus est en outre caractérisé en ce que l'élément de sécurité comporte des contacts électriques et en ce que le module de communication série est relié à l'élément de sécurité par au moins un contact électrique.

Avantageusement, il est possible, selon ce mode de réalisation, d'utiliser des contacts électriques de l'élément de sécurité. En particulier, si cet élément de sécurité est une carte de type SIM, il est possible d'utiliser avantageusement un contact d'entrée/sortie de données (notamment le contact ISO C7 I/O - pour Input/Output en anglais). En effet, ce contact reste libre dans le cadre de l'invention (dans le contexte d'un téléphone mobile, il est naturellement utilisé pour la communication entre le mobile et son élément de sécurité). Le module de communication série selon l'invention se charge de convertir le signal série entrant sur l'interface USB en signal adapté pour l'entrée/sortie de la carte SIM.

Selon un autre aspect matériel, l'invention concerne également un terminal pour la gestion d'au moins un objet portable tel que décrit précédemment, connectable à l'objet portable par le module série et à un réseau de communications par un module de communication réseau, caractérisé en ce qu'il comporte :
- un module de requête d'un service sécurisé auprès d'un serveur du réseau de communications ;
- un module de réception de données sécurisées relatives à l'objet portable ou au service sécurisé en provenance d'un serveur du réseau de communications ;
- un module de transmission à l'objet portable de données relatives à l'objet portable ou au service sécurisé sur le module série.

Selon un autre aspect matériel, l'invention concerne également un système pour l'exploitation d'objets portables comportant :
- au moins un objet portable tel que décrit précédemment ;
- au moins un terminal pour la gestion de l'objet portable tel que décrit précédemment ;
- un serveur d'applications sur le réseau de communications pour offrir au moins un service sécurisé;
- un serveur de gestion global pour l'objet portable sur le réseau de communications, possédant les droits d'accès à l'élément de sécurité de l'objet portable.
- au moins un serveur de gestion local pour au moins un service sécurisé de l'objet portable, sur le réseau de communications, apte à obtenir les droits d'accès à l'application relative au service sécurisé dans l'élément de sécurité de l'objet portable.

Selon un aspect fonctionnel, l'invention concerne également un procédé de gestion de services sécurisés pour un objet portable tel que décrit précédemment, connecté à un terminal par un module de communication série, le terminal étant connecté par ailleurs à un réseau de communications par un module de communication réseau, le procédé étant caractérisé en ce qu'il comporte les étapes suivantes sur le terminal :
- requête d'un service sécurisé auprès d'un serveur du réseau de communications ;
- réception de données sécurisées relatives à l'objet portable ou au service sécurisé en provenance d'un serveur du réseau de communications ;
- transmission à l'objet portable de données relatives à l'objet portable ou au service sécurisé sur le module série.

Selon un autre aspect fonctionnel, l'invention concerne également un procédé de mise en œuvre d'un service sécurisé sur un objet portable tel que décrit précédemment, l'objet étant connecté à un terminal par son module de communication série, caractérisé en ce qu'il comporte les étapes suivantes sur l'objet portable :
- réception de données sécurisées relatives à l'objet ou à un service sécurisé via le module de communication série;
- installation des données sécurisées dans l'élément de sécurité de l'objet portable.

Les objets selon les aspects fonctionnels de l'invention procurent au moins les mêmes avantages que ceux procurés par les aspects matériels précédemment décrits. Les caractéristiques optionnelles évoquées pour le premier aspect matériel peuvent s'appliquer en termes de procédé.

Selon un autre aspect fonctionnel, l'invention concerne également un procédé pour l'exploitation d'objets portables pour un système tel que décrit ci-dessus, caractérisé en ce qu'il comporte les étapes suivantes :
- initialisation de l'objet portable ;
- requête par le terminal d'un service S auprès d'un serveur du réseau de communications ;
- transmission au terminal de données sécurisées relatives au service sécurisé par un serveur du réseau de communications ;
- réception sur le terminal des données sécurisées relatives au service sécurisé ;
- transmission à l'objet portable des données sécurisées relatives au service sécurisé via le module de communication série.

Avantageusement selon cet aspect, la transmission des données au bracelet se fait très simplement depuis un serveur réseau (par exemple, du réseau Internet, ou selon une variante, d'un réseau mobile) vers le terminal chargé de transmettre les données au bracelet lorsqu'il lui est connecté.

Selon un mode de mise en œuvre particulier de cet aspect, l'invention concerne également un procédé pour l'exploitation d'objets portables tel que décrit ci-dessus, caractérisé en ce que l'étape d'initialisation inclut la transmission à l'objet portable par le serveur de gestion global d'une application sécurisée générique pour les services sécurisés de l'objet portable et en ce que les données sécurisées transmises au terminal sont des données de personnalisation pour le service sécurisé requis.

Avantageusement selon cet aspect, une *cardlet* générique est fournie à l'objet lors de son initialisation par le serveur de gestion. Par la suite, des données de personnalisation d'un service sécurisé seront transmises à l'objet et installées dans la mémoire de son module de sécurité, dans une zone mémoire dédiée, sous contrôle de la *cardlet.*

Selon un autre mode de mise en œuvre particulier de cet aspect, l'invention concerne également un procédé pour l'exploitation d'objets portables tel que décrit ci-dessus, caractérisé en ce que les données sécurisées transmises au terminal sont celles d'une application sécurisée relative au service sécurisé par un serveur du réseau de communications, pour le service sécurisé requis.

Avantageusement selon cet aspect, une *cardlet* (aussi appelée applet) particulière est fournie à l'objet sur requête du service. L'étape d'initialisation ne requiert pas d'installer une *cardlet* générique. Le serveur de gestion global, qui possède les droits d'écriture dans l'objet, peut avoir délégué ses droits et la *cardlet* dans ce cas peut provenir du serveur de gestion locale (SGL) ou même du kiosque (KSK).

Selon un autre aspect matériel, l'invention concerne également un programme d'ordinateur apte à être mis en œuvre pour un procédé de gestion de services sécurisés pour un objet portable tel que défini précédemment, le programme comprenant des instructions de code qui, lorsque le programme est exécuté par un processeur du terminal, réalise les étapes du procédé.

Selon un autre aspect matériel, l'invention concerne également un programme d'ordinateur apte à être mis en œuvre pour un procédé de mise en œuvre d'un service sécurisé sur un objet portable tel que défini précédemment, le programme comprenant des instructions de code qui, lorsque le programme est exécuté par un processeur de l'objet portable, réalise les étapes du procédé.

Ces programmes d'ordinateur présentent des caractéristiques et avantages analogues à ceux décrits précédemment en relation avec les procédés correspondants.

Selon encore un autre aspect matériel, l'invention a trait à un support d'enregistrement lisible par un processeur de données sur lequel est enregistré un programme comprenant des instructions de code de programme pour l'exécution des étapes de l'un quelconque des procédés définis ci-dessus.

L'invention sera mieux comprise à la lecture de la description qui suit, donnée à titre d'exemple et faite en référence aux dessins annexés.

### Les figures:

- la figure 1 représente le contexte d'utilisation d'un terminal mobile apte à fournir selon l'état de l'art des services NFC sécurisés ;
- la figure 2 représente le contexte de gestion d'un objet portable pouvant être utilisé dans un mode de réalisation de l'invention ;
- la figure 3 représente l'architecture matérielle d'un objet portable conforme à un mode de réalisation de l'invention ;
- la figure 4 représente un organigramme illustrant les différentes étapes d'un procédé de gestion d'objets portables selon un mode de réalisation de l'invention ;
- la figure 5 représente un schéma électronique détaillé d'un objet selon un mode de réalisation de l'invention.

### Description détaillée d'un exemple de réalisation illustrant l'invention

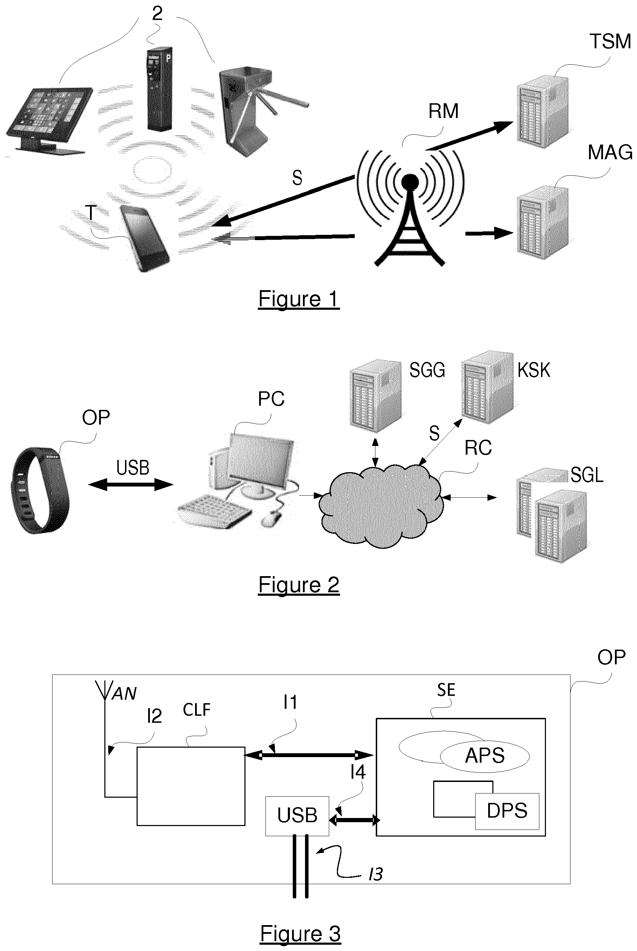

La figure 1 représente le contexte d'utilisation d'un terminal mobile (T), ou *smartphone,* apte à fournir selon l'état de l'art des services NFC sécurisés.

Un tel service NFC est par exemple un service d'achat et de consommation de titres de transports. Le service est délivré sous forme d'applications et de données stockées sur un serveur (MAG) de type « magasin d'applications » (en anglais *store,* par exemple pour les applications *Apple* ou *Androïd*), par un fournisseur d'applications.

Le mobile T comprend notamment un composant NFC, formé d'un contrôleur NFC et d'une antenne associée, et un élément de sécurité de type carte à puce, ici une carte SIM. L'association des deux éléments permet de bénéficier de services NFC sécurisés, c'est-à-dire de services garantissant au client et propriétaire du mobile les fonctions d'authentification (de l'élément de sécurité du mobile), d'identification et de sécurisation des communications. La sécurité repose classiquement sur la gestion des clés cryptographiques qui sont contenues dans l'élément de sécurité.

Pour bénéficier d'un service sécurisé NFC (S) sur le mobile, c'est-à-dire un service mettant en œuvre un élément de sécurité, le service comprend généralement deux applications :
- une application non sécurisée à installer sur le mobile (T), comprenant notamment l'interface utilisateur ;
- une partie sécurisée (APS), aussi appelée *applet* ou *cardlet,* à installer sur l'élément de sécurité (SE), comprenant notamment les programmes de gestion des données sensibles du service. Cette application sécurisée est accompagnée de données, dont généralement une clé cryptographique secrète associée au service (K_AP).

L'architecture selon l'état de l'art utilise une plateforme, généralement appelée TSM (pour *Trusted Service Manager* en anglais), permettant de communiquer avec l'élément sécurisé et apte à gérer d'une part le cycle de vie du service NFC (installation, perte ou vol, changement d'équipement, etc.) et d'autre part la communication sécurisée à distance avec l'application sur la carte, par exemple pour la personnalisation. Le TSM peut être dépendant ou non de l'opérateur de réseau (MNO pour Mobile Network Operator), non représenté. La partie non sécurisée de l'application (usage, interface, etc.) est chargée à partir du magasin (MAG) et installée sur le mobile (T) pour communication avec l'applet (APS), aussi appelée *cardlet,* qui se trouve dans l'élément de sécurité. Cette architecture est définie par le consortium Global Platform (qui définit un ensemble de spécifications relatives aux déploiements d'applications sur des éléments de sécurité). Dans ce contexte, les différentes étapes pour l'exploitation d'un service NFC sont donc les suivantes :
- chargement de la partie non sécurisée de l'application à partir du magasin d'applications ;
- chargement de l'application sécurisée et des données sensibles du service dans la carte SIM à partir du serveur d'application via le TSM en utilisant le réseau de l'opérateur de service ; ce type de chargement est aussi appelé OTA (Over The Air) ;
- personnalisation/gestion de l'application via le TSM ;
- utilisation de l'application pour rendre le service (par exemple, de transport) par un dialogue entre le terminal mobile (T), le composant NFC et le lecteur externe (par exemple, vérification du titre de transport d'un abonné et décrémentation du nombre de titres de transports disponibles pour cet abonné pour ce service).

Le problème majeur de cette architecture est sa complexité, particulièrement pour ce qui concerne le terminal mobile : celui-ci doit nécessairement disposer de fonctions évoluées, et notamment celles de communication sur le réseau de l'opérateur (réseau mobile) avec le TSM. Or tout le monde ne peut pas disposer d'un terminal mobile évolué (pour des raisons de coût, de sécurité, de complexité, mais aussi d'encombrement, d'autonomie, etc.).

La figure 2 représente le contexte de gestion d'un objet portable pouvant être utilisé dans un mode de réalisation de l'invention.

L'objet portable (OP) est selon cet exemple un bracelet très simple et peu coûteux à porter au poignet, portant les services de l'utilisateur. L'objet portable pourrait prendre une toute autre forme. Ses seules interfaces de communication sont une liaison série via un port micro-USB et une interface sans contact de type NFC.

Comme le terminal mobile de l'état de l'art décrit ci-dessus à l'appui de la figure 1, le bracelet peut être utilisé comme une carte sans contact face à divers terminaux lecteurs NFC (2). Il comprend une antenne, un contrôleur NFC et un élément de sécurité de type carte à puce, ici une carte SIM.

A la différence du terminal mobile précédemment décrit, il ne comporte cependant ni afficheur, ni touche, ni pile (ou batterie), ni module de communication avec le réseau mobile ou un quelconque autre réseau de communication, par exemple Internet. La carte SIM est de préférence non-amovible. Vu de l'extérieur, il n'offre qu'un port micro-USB pour la gestion des services NFC.

L'architecture proposée ici fait usage de trois serveurs sur le réseau de communication (qu'il soit de type mobile, ou Internet, etc.) :
∘ le serveur SGG est le Gestionnaire Global du bracelet ; il contrôle le cycle de vie du bracelet, indépendamment des applications qui lui sont associées ; il possède une clé principale de la carte SIM (notée ici K_SE) ;
∘ Le serveur kiosque (KSK) stocke les applications et les met à disposition ; ces applications sont liées par exemple à des applications de transport (Tramway, bus, etc.) d'une ville donnée ;
∘ le serveur SGL est le Gestionnaire Local du bracelet ; il effectue la gestion locale des applications qui se trouvent sur le bracelet, par exemple à titre d'information de suivi ou de personnalisation par l'utilisateur ; il est également chargé de la gestion des données sur le bracelet (chargement de nouveaux titres de transport, etc.). Il possède les clés des applets du service sur la carte SIM (K_AP).
   - Il peut y avoir plusieurs serveurs SGL, chacun étant responsable d'un ou plusieurs services ;
   - En variante, on pourrait effectuer ces opérations locales via une application embarquée sur le terminal mobile ; on remarquera cependant que dans ce cas seules des données non confidentielles peuvent être rendues accessibles directement sur le terminal, à moins de prévoir la présentation d'un code confidentiel ; en variante, si des informations plus sensibles sont soumises à une présentation de privilèges plus importants, il est possible moyennant un accès au serveur de gestion des bracelets d'obtenir ces privilèges.
   - Selon encore une autre variante, on pourrait aussi autoriser un téléchargement de proximité (via le NFC), notamment pour les données associées à l'application.

Le chargement d'une application et des données secrètes associées dans le bracelet se fait via le module de communication USB. Le bracelet est relié par ce module à un terminal externe de l'utilisateur, ici un PC (mais il pourrait s'agit d'un smartphone, d'une tablette, etc.)

Le chargement d'une application est contrôlé par un dispositif à distance, le serveur de gestion SGG qui possède seul les droits d'accès à l'élément sécurisé du bracelet. Il joue un rôle sensiblement identique à celui du TSM précédemment décrit à l'appui de la figure 1, mais on remarquera que le bracelet n'est pas connecté au réseau de l'opérateur mobile (il ne dispose pas de module de communication autre que les modules USB et NFC).

Les applications sécurisées chargées dans le bracelet peuvent être compatibles avec les applications de type « battery off » (c'est-à-dire les applications qui continuent à fonctionner sur un mobile lorsque sa batterie est faible et juste suffisante pour alimenter l'élément de sécurité et le composant NFC) que l'on charge selon l'état de l'art dans les téléphones mobiles sans contact.

Une fois que les applications et données sont chargées dans le bracelet, il peut, en mode autonome (i.e. non connecté au terminal mobile), remplacer une carte à puce sans contact dans le contexte des services installés dans la carte SIM, de manière identique au terminal mobile présenté ci-avant (il peut avantageusement servir de carte bancaire, carte de transport, carte de bibliothèque, carte de cantine, etc.)

La figure 3 représente l'architecture matérielle d'un objet portable conforme à un mode de réalisation de l'invention.

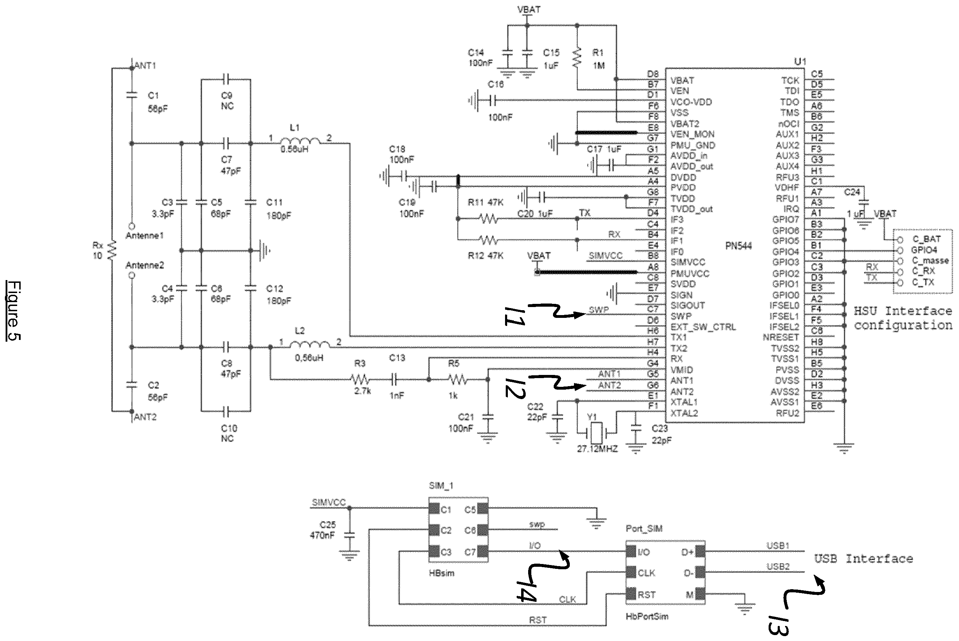

Il comporte :
- un composant NFC, appelé CLF (ContactLess Frontend) capable d'assurer des communications en champ proche de type NFC, avec un lecteur externe, par exemple un lecteur (borne) de validation de tickets (2).
- des moyens (I2) de communication par champ proche de type NFC, via l'antenne NFC AN.
- un élément sécurisé (SE), ici une carte SIM, comportant au moins :
   ∘ des informations de cryptographie relatives à l'élément de sécurité (classiquement, des clés secrètes et algorithmes associés) ;
   ∘ des moyens (I1) de communication avec le module CLF, de type ISO 7816 (SWP) ;
   ∘ des mémoires destinées à contenir les applications (APS pour APPlet Sécurisée) et/ou données de personnalisation (DPS pour Données de Personnalisation Sécurisées) des services sans contacts.
- un module USB de conversion entre l'interface de communication I3 série de type USB entrante, apte à établir une communication série pour recevoir un programme (APS) ou des données (DPS) d'un service S avec un terminal en USB, et l'interface de communication I4 de l'élément de sécurité permettant d'accéder au SE pour y inscrire les données sécurisées (applications et/ou données de personnalisation). Le module de communication USB selon l'invention réalise l'adaptation électrique et protocolaire nécessaire à la conversion entre les deux interfaces (I3 et I4). Selon ce mode de réalisation de l'invention, il se charge notamment de convertir le signal série entrant sur l'interface USB en signal adapté pour l'entrée/sortie ISO C7 de la carte SIM, comme illustré en figure 5.

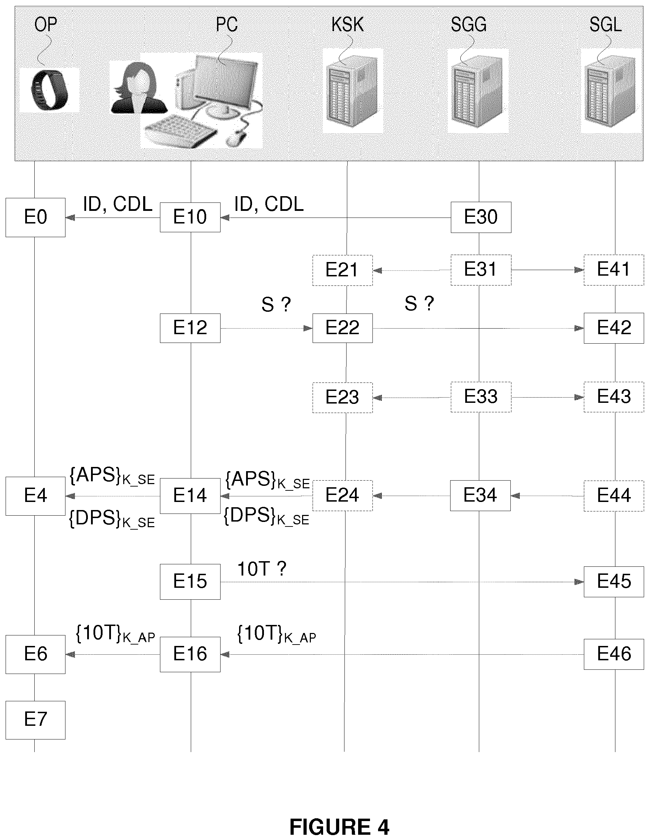

La figure 4 représente un organigramme illustrant les différentes étapes d'un procédé de gestion d'objets portables selon un mode de réalisation de l'invention.

On rappelle ici que l'architecture de bout en bout de gestion des applications sur le bracelet (OP) fait appel à trois serveurs qui sont le serveur SGG de gestion globale du bracelet ; le serveur kiosque (KSK) des applications ; et le serveur local de gestion des applications du bracelet (SGL). Ces serveurs peuvent être distincts ou confondus dans le réseau de communication.

Lors d'une étape E0, le bracelet est initialisé par le serveur SGG, via le PC auquel il est connecté par la liaison USB. Le serveur SGG possède seul les droits d'accès à l'élément sécurisé du bracelet (notamment sa clé secrète, notée ici K_SE). Notamment, le SGG peut, lors de l'étape E30 correspondante, charger dans l'élément de sécurité du bracelet :
- l'identifiant (ID) du bracelet ;
- une ou plusieurs applications liées à des services, sous forme de *cardlets* ou *applets* ; il est notamment intéressant d'utiliser cette forme d'initialisation dans le cas où une seule *cardlet* (notée CDS) dite générique, gère plusieurs, voire tous les services du bracelet. Une fois la *cardlet* générique installée, chaque service à installer ultérieurement utilisera une zone mémoire dédiée en mémoire de l'élément de sécurité, sous contrôle de la *cardlet.* Cette opération est appelée personnalisation de la *cardlet,* et les données applicatives sont appelées des données de personnalisation (DPS) ;
- les clés cryptographiques opérationnelles de la (ou des) cardlet (K_AP).

Lors d'une étape E31, dite de délégation, le serveur SGG peut optionnellement procéder à l'initialisation d'un ou plusieurs serveurs locaux SGL (étape E41) ou du kiosque KSK (étape E21). Le SGG peut notamment, lors de cette étape, déléguer les droits (par exemple les clés secrètes) de la (ou les) *cardlet* associée aux différents services installés dans le bracelet à l'un des serveurs (SGL ou KSK). Ces étapes marquées en pointillés sont optionnelles. Selon une variante, les droits seront en effet fournis plus tard lors de l'installation d'un service, ou ne seront pas délégués.

Lors de l'étape E12, l'utilisateur choisit un service S sur le kiosque (KSK) à partir du PC ; selon cet exemple, l'utilisateur choisit un service de transports de la ville de Caen pour son fils qui possède un bracelet (OP) mais pas de smartphone.

Le kiosque interroge le serveur local SGL lors d'une étape E22.
∘ Cette étape n'est pas nécessaire si l'opération de délégation préalable a permis au kiosque de bénéficier des droits associés au service, auquel cas on peut passer directement à l'étape E24. Selon cette variante, le kiosque lui-même pourrait en effet posséder la *cardlet* et/ou les données, prenant ainsi le rôle du serveur SGL local.
∘ Si le serveur SGL ne possède pas les droits sur le bracelet, une étape de délégation identique à celle présentée plus haut (étapes E33, E23, E43 identiques aux étapes E31, E21, E41) peut avoir lieu à ce moment. Le SGG fournit à un autre serveur (SGL ou KSK) la cardlet et/ou les données de personnalisation et/ou les clés associées au service.
∘ Si le serveur SGL possède les droits pour le service (droits qui lui ont été conférés lors d'une étape préalable de délégation), le serveur SGL fournit le service au PC pour le bracelet,
   ∘ sous forme d'une *cardlet* (APS)*,*
   ∘ ou sous forme d'une demande de zone de données applicatives (DPS) pour une cardlet (CDL) qui a déjà été installée sur la carte, notamment lors de l'étape E0 d'initialisation du bracelet.

Lors d'une étape E14, le PC reçoit l'application (APS) ou les données de personnalisation (DPS) sécurisées de la part du SGG (E44), du SGL (E34) si celui-ci possède les droits par délégation, ou du kiosque (E24) si celui-ci possède les droits par délégation.

Lors de l'étape E4, la *cardlet* APS ou les données de personnalisation DPS sont reçues via le port USB relié à la carte SIM et chargées dans le bracelet.

Lors d'une étape E15, l'utilisateur demande, à partir du PC, au serveur local SGL, de charger 10 tickets de transport (10T) dans le service de transport (S) installé sur le bracelet.

Le serveur SGL répond au PC lors d'une étape E46 en fournissant les dix tickets de transport (10T) au PC (E16) pour chargement dans la carte SIM du bracelet lors d'une étape E6.

Le service de transport est désormais prêt à être utilisé lors d'une étape E7 finale au cours de laquelle le porteur du bracelet peut utiliser un ticket en présentant son bracelet au lecteur NFC.

La figure 5 représente un circuit électronique détaillé correspondant à un mode de réalisation de l'invention.

Le schéma détaillé est conforme au schéma bloc de la figure 3. Notamment les interfaces I1, I2, I3, I4 correspondant respectivement aux interfaces entre la carte SIM et le module NFC (I1), le composant NFC et l'antenne (I2), la carte SIM et le module USB (I4), le module USB et l'extérieur de l'objet (I3) sont représentées sur le circuit.

Une variante, on pourrait connecter un microprocesseur sur les ports notés GPIO afin que les données en provenance de l'antenne (544) transitent par le microprocesseur additionnel avant d'être fournies à la SIM, ce qui permettrait une plus grande souplesse d'utilisation, une plus grande vitesse, etc.

Il va de soi que le mode de réalisation qui a été décrit ci-dessus a été donné à titre purement indicatif et nullement limitatif, et que de nombreuses modifications peuvent être facilement apportées par l'homme de l'art sans pour autant sortir du cadre de l'invention.

## Revendications

1. Objet portable (OP) apte à rendre une pluralité de services sécurisés (S) en champ proche (NFC), comprenant :
∘ un module en champ proche (NFC) comprenant une antenne (AN) et un microcontrôleur (CLF) pour gérer une communication en champ proche avec une unité de lecture en champ proche (2) externe à l'objet portable ;
∘ un élément de sécurité (SE) qui est une carte SIM comprenant :
▪ des moyens de mémorisation (MEM) pour la mémorisation d'applications (CDL, APS) et de données (DPS, 10T) relatives à au moins un service sécurisé (S) en champ proche (NFC),
▪ un module de communication (I1) avec le module en champ proche (NFC) pour l'échange de données relatives audit service sécurisé (S),
▪ au moins un contact électrique (C7) d'entrée/sortie dédié à la communication avec l'objet portable,
l'objet portable comprenant aussi un module de communication série (USB) comportant :
▪ une première interface série (I3) pour recevoir en provenance d'un terminal un signal comportant des applications (CDL, APS) et/ou des données (DPS, 10T) dudit service sécurisé (S) ;
▪ un module de conversion apte à convertir le signal reçu en un signal adapté pour le contact d'entrée/sortie de l'élément de sécurité ;
▪ une seconde interface reliée directement à l'élément de sécurité (SE, SIM, I4) via ledit au moins un contact électrique de l'élément de sécurité pour lui transmettre le signal adapté comprenant des applications (CDL, APS) et/ou des données (DPS, 10T) dudit service sécurisé (S).

2. Objet portable (OP) selon la revendication 1, tel qu'il est dépourvu d'alimentation électrique interne à l'objet et de dispositif de stockage d'énergie.

3. Objet portable (OP) selon la revendication 2, tel qu'il est adapté à être alimenté électriquement uniquement lorsqu'il est connecté pour échanger des données avec un dispositif externe via son module de communication série (USB).

4. Objet portable (OP) selon la revendication 2, tel qu'il est adapté à être alimenté électriquement uniquement lorsqu'il est connecté pour échanger des données avec une unité de lecture en champ proche (2).

5. Système pour l'exploitation d'objets portables (OP) comportant :
- au moins un objet portable (OP) selon la revendication 1 ;
- un serveur d'applications (KSK) sur le réseau de communications (RC) pour offrir au moins un service sécurisé (S);
- au moins un terminal (PC) pour la gestion de l'objet portable comportant
i. un module de de communication série (USB) pour se connecter à l'objet portable (OP) ;
ii. un module de communication réseau (IP) pour se connecter à un réseau de communications (RC) ;
iii. un module de requête (E12) pour requérir un service sécurisé (S) auprès d'un serveur (KSK) du réseau de communications (RC) ;
iv. un module de réception (E10, E14, E16) de données sécurisées relatives à des applications et/ou des données relatives à au moins un service sécurisé (CDL, APS, DPS, 10T) en provenance d'un serveur (SGG, SGL, KSK) du réseau de communications (RC);
v. un module de transmission (E10, E14, E16) à l'objet portable desdites données sécurisées (CDL, ID, APS, DPS) via le module de communication série (USB, I3).

6. Système pour l'exploitation d'objets portables (OP) selon la revendication 5, comportant en outre :
- un serveur de gestion global (SGG) pour l'objet portable sur le réseau de communications, possédant les droits d'accès (K_SE) à l'élément de sécurité (SE) de l'objet portable (OP).
- au moins un serveur de gestion local (SGL) pour au moins un service sécurisé (S) de l'objet portable, sur le réseau de communications, apte à obtenir les droits d'accès (K_AP) à l'application (*cardlet,* APS) relative au service sécurisé dans l'élément de sécurité (SE) de l'objet portable (OP).

7. Procédé de mise en œuvre d'un service sécurisé en champ proche (NFC) sur un objet portable (OP) selon la revendication 1, comportant les étapes suivantes sur l'objet portable :
- connexion de l'objet portable à un terminal (PC) via son module de communication série (USB) ;
- réception (E4, E6) d'un signal comportant des applications (CDL, APS) et/ou des données (DPS) dudit service sécurisé (S) via la première interface série dudit module de communication série ;
- conversion dudit signal reçu en un signal adapté pour le contact d'entrée/sortie de l'élément de sécurité ;
- transmission du signal adapté comportant des applications et/ou des données du service sécurisé à l'élément de sécurité via la seconde interface dudit module de communication série ;
- installation des applications et/ou des données du service sécurisé (CDL, APS, DPS, 10T) dans l'élément de sécurité (SE) de l'objet portable (OP).

8. Procédé de gestion de services pour un objet portable (OP) selon la revendication 1, connecté à un terminal (PC) par le module de communication série (USB, I3), le terminal étant connecté par ailleurs à un réseau de communications (RC) par un module de communication réseau (IP), le procédé comportant les étapes suivantes sur le terminal :
- connexion du terminal à l'objet portable via son module de communication série (USB) ;
- requête (E12) d'un service sécurisé (S) en champ proche (NFC) auprès d'un serveur (KSK) du réseau de communications (RC) ;
- réception (E10, E14, E16) des applications et/ou des données du service sécurisé en provenance d'un serveur (SGG, SGL, KSK) du réseau de communications;
- transmission (E10, E14, E16) à l'objet portable d'un signal comportant lesdites applications et/ou données (CDL, APS, DPS, 10T) du service sécurisé sur le module série de l'objet portable (USB, I3), lesdites applications et/ou données (CDL, APS, DPS, 10T) du service sécurisé étant destinées à être installées dans l'élément de sécurité de l'objet portable.

9. Procédé de gestion de services selon la revendication 8, dans lequel les applications et/ou données du service sécurisé transmises à l'objet comportent une application générique (CDL) pour les services sécurisés de l'objet portable (OP) et des données de personnalisation (DPS) pour le service sécurisé requis.

10. Procédé de gestion de services selon la revendication 8, dans lequel les applications et/ou données du service sécurisé transmises à l'objet comportent une application sécurisée (APS) relative au service sécurisé (S).

11. Programme d'ordinateur comportant des instructions de code pour la mise en œuvre du procédé de gestion de services sécurisés pour un objet portable, conforme à la revendication 8, lorsque celle-ci est exécutée par un processeur du terminal.

12. Programme d'ordinateur comportant des instructions de code pour la mise en œuvre du procédé de mise en œuvre d'un service sécurisé sur un objet portable, conforme à la revendication 7, lorsque celle-ci est exécutée par un processeur de l'objet portable.

## Patentansprüche

1. Tragbares Objekt (OP), das geeignet ist, eine Mehrzahl von gesicherten Nahfeld (NFC) -Diensten (S) zu leisten, umfassend:
o ein Nahfeld (NFC) -Modul, das eine Antenne (AN) und einen Mikrocontroller (CLF) umfasst, um eine Nahfeld-Kommunikation mit einer Nahfeld-Leseeinheit (2) außerhalb des tragbaren Objekts zu verwalten;
o ein Sicherheitselement (SE), das eine SIM-Karte ist, umfassend:
▪ Speicherungsmittel (MEM) zur Speicherung von Anwendungen (CDL, APS) und Daten (DPS, 10T) in Bezug auf wenigstens einen gesicherten Nahfeld (NFC) -Dienst (S),
▪ ein Modul zur Kommunikation (I1) mit dem Nahfeld (NFC) -Modul zum Austausch von Daten in Bezug auf den gesicherten Dienst (S),
▪ wenigstens einen elektrischen Ein-/Ausgangskontakt (C7), der eigens zur Kommunikation mit dem tragbaren Objekt vorgesehen ist,
wobei das tragbare Objekt auch ein serielles Kommunikationsmodul (USB) umfasst, das Folgendes aufweist:
▪ eine erste serielle Schnittstelle (I3) zum Empfang, von einem Endgerät, eines Signals, das Anwendungen (CDL, APS) und/oder Daten (DPS, 10T) des gesicherten Dienstes (S) aufweist;
▪ ein Umwandlungsmodul, das geeignet ist, das empfangene Signal in ein Signal umzuwandeln, das für den Ein-/Ausgangskontakt des Sicherheitselements geeignet ist;
▪ eine zweite Schnittstelle, die über den wenigstens einen elektrischen Kontakt des Sicherheitselements direkt an das Sicherheitselement (SE, SIM, 14) angeschlossen ist, um diesem das geeignete Signal zu übermitteln, das Anwendungen (CDL, APS) und/oder Daten (DPS, 10T) des gesicherten Dienstes (S) umfasst.

2. Tragbares Objekt (OP) nach Anspruch 1, wobei es keine Stromversorgung im Inneren des Objekts und keine Energiespeichervorrichtung aufweist.

3. Tragbares Objekt (OP) nach Anspruch 2, wobei es geeignet ist, nur dann mit Strom versorgt zu werden, wenn es verbunden ist, um Daten mit einer äußeren Vorrichtung über sein serielles Kommunikationsmodul (USB) auszutauschen.

4. Tragbares Objekt (OP) nach Anspruch 2, wobei es geeignet ist, nur dann mit Strom versorgt zu werden, wenn es verbunden ist, um Daten mit einer Nahfeld-Leseeinheit (2) auszutauschen.

5. System zum Betrieb tragbarer Objekte (OP) aufweisend:
- wenigstens ein tragbares Objekt (OP) nach Anspruch 1;
- einen Anwendungsserver (KSK) im Kommunikationsnetzwerk (RC) zum Anbieten wenigstens eines gesicherten Dienstes (S);
- wenigstens ein Endgerät (PC) für die Verwaltung des tragbaren Objekts aufweisend
i. ein serielles Kommunikationsmodul (USB) zur Verbindung mit dem tragbaren Objekt (OP);
ii. ein Netzwerk-Kommunikationsmodul (IP) zur Verbindung mit einem Kommunikationsnetzwerk (RC);
iii. ein Anfragemodul (E12) zur Anfrage eines gesicherten Dienstes (S) bei einem Server (KSK) des Kommunikationsnetzwerks (RC);
iv. ein Modul zum Empfang (E10, E14, E16) gesicherter Daten in Bezug auf Anwendungen und/oder Daten in Bezug auf wenigstens einen gesicherten Dienst (CDL, APS, DPS, 10T) von einem Server (SGG, SGL, KSK) des Kommunikationsnetzwerks (RC);
v. ein Modul zur Übermittlung (E10, E14, E16) der gesicherten Daten (CDL, ID, APS, DPS) an das tragbare Objekt über das serielle Kommunikationsmodul (USB, I3).

6. System zum Betrieb tragbarer Objekte (OP) nach Anspruch 5, aufweisend ferner:
- einen globalen Verwaltungsserver (SGG) für das tragbare Objekt im Kommunikationsnetzwerk, der die Rechte zum Zugriff (K_SE) auf das Sicherheitselement (SE) des tragbaren Objekts (OP) besitzt.
- wenigstens einen lokalen Verwaltungsserver (SGL) für wenigstens einen gesicherten Dienst (S) des tragbaren Objekts im Kommunikationsnetzwerk, der geeignet ist, die Rechte zum Zugriff (K_AP) auf die Anwendung *(cardlet,* APS) in Bezug auf den gesicherten Dienst im Sicherheitselement (SE) des tragbaren Objekts (OP) zu erhalten.

7. Verfahren zur Umsetzung eines gesicherten Nahfeld (NFC) -Dienstes auf einem tragbaren Objekt (OP) nach Anspruch 1, aufweisend die folgenden Schritte auf dem tragbaren Objekt:
- Verbinden des tragbaren Objekts mit einem Endgerät (PC) über sein serielles Kommunikationsmodul (USB);
- Empfangen (E4, E6) eines Signals, das Anwendungen (CDL, APS) und/oder Daten (DPS) des gesicherten Dienstes (S) aufweist, über die erste serielle Schnittstelle des seriellen Kommunikationsmoduls;
- Umwandeln des empfangenen Signals in ein Signal, das für den Ein-/Ausgangskontakt des Sicherheitselements geeignet ist;
- Übermitteln des geeigneten Signals, das Anwendungen und/oder Daten des gesicherten Dienstes aufweist, an das Sicherheitselement über die zweite Schnittstelle des seriellen Kommunikationsmoduls;
- Installieren der Anwendungen und/oder Daten des gesicherten Dienstes (CDL, APS, DPS, 10T) im Sicherheitselement (SE) des tragbaren Objekts (OP).

8. Verfahren zur Verwaltung von Diensten für ein tragbares Objekt (OP) nach Anspruch 1, das mit einem Endgerät (PC) über das serielle Kommunikationsmodul (USB, I3) verbunden ist, wobei das Endgerät zudem über ein Netzwerk-Kommunikationsmodul (IP) mit einem Kommunikationsnetzwerk (RC) verbunden ist, wobei das Verfahren die folgenden Schritte auf dem Endgerät aufweist:
- Verbinden des Endgeräts mit dem tragbaren Objekt über dessen serielles Kommunikationsmodul (USB);
- Anfragen (E12) eines gesicherten Nahfeld (NFC) - Dienstes (S) bei einem Server (KSK) des Kommunikationsnetzwerks (RC);
- Empfangen (E10, E14, E16) von Anwendungen und/oder Daten des gesicherten Dienstes von einem Server (SGG, SGL, KSK) des Kommunikationsnetzwerks;
- Übermitteln (E10, E14, E16) eines Signals, das die Anwendungen und/oder Daten (CDL, APS, DPS, 10T) des gesicherten Dienstes aufweist, an das tragbare Objekt auf dem seriellen Modul des tragbaren Objekts (USB, I3), wobei die Anwendungen und/oder Daten (CDL, APS, DPS, 10T) des gesicherten Dienstes dazu bestimmt sind, im Sicherheitselement des tragbaren Objekt installiert zu sein.

9. Verfahren zur Verwaltung von Diensten nach Anspruch 8, wobei die Anwendungen und/oder Daten des gesicherten Dienstes, die an das Objekt übermittelt werden, eine generische Anwendung (CDL) für die gesicherten Dienste des tragbaren Objekts (OP) und Personalisierungsdaten (DPS) für den erforderlichen gesicherten Dienst aufweisen.

10. Verfahren zur Verwaltung von Diensten nach Anspruch 8, wobei Anwendungen und/oder Daten des gesicherten Dienstes, die an das Objekt übermittelt werden, eine gesicherte Anwendung (APS) in Bezug auf den gesicherten Dienst (S) aufweisen.

11. Computerprogramm, aufweisend Code-Anweisungen für die Umsetzung des Verfahrens zur Verwaltung von gesicherten Diensten für ein tragbares Objekt nach Anspruch 8, wenn diese von einem Prozessor des Endgeräts ausgeführt wird.

12. Computerprogramm, aufweisend Code-Anweisungen für die Umsetzung des Verfahrens zur Umsetzung eines gesicherten Dienstes auf einem tragbaren Objekt nach Anspruch 7, wenn diese von einem Prozessor des tragbaren Objekts ausgeführt wird.

## Claims

1. Portable object (OP) which is able to render a plurality of near-field (NFC) secure services (S), comprising:
o a near-field (NFC) module comprising an antenna (AN) and a microcontroller (CLF) for managing near-field communication with a near-field read unit (2) which is external to the portable object;
o a security element (SE) which is a SIM card comprising:
• storage means (MEM) for storing applications (CDL, APS) and data (DPS, 10T) relating to at least one near-field (NFC) secure service (S),
• a communication module (I1) for communicating with the near-field (NFC) module for exchanging data relating to said secure service (S),
• at least one input/output electrical contact (C7) dedicated to communication with the portable object,
the portable object also comprising a serial communication module (USB) comprising:
• a first serial interface (13) for receiving, originating from a terminal, a signal comprising applications (CDL, APS) and/or data (DPS, 10T) of said secure service (S);
• a conversion module which is able to convert the signal received into a signal adapted for the input/output contact of the security element;
• a second interface connected directly to the security element (SE, SIM, I4) via said at least one electrical contact of the security element for transmitting to it the adapted signal comprising applications (CDL, APS) and/or data (DPS, 10T) of said secure service (S).

2. Portable object (OP) according to Claim 1, such that it has no electric power supply which is internal to the object or energy storage device.

3. Portable object (OP) according to Claim 2, such that it is adapted to being supplied with electric power only when it is connected for exchanging data with an external device via its serial communication module (USB).

4. Portable object (OP) according to Claim 2, such that it is adapted to being supplied with electric power only when it is connected for exchanging data with a near-field read unit (2).

5. System for operating portable objects (OP), comprising:
- at least one portable object (OP) according to Claim 1;
- an application server (KSK) on the communications network (RC) for offering at least one secure service (S) ;
- at least one terminal (PC) for managing the portable object, comprising
i. a serial communication module (USB) for connecting to the portable object (OP);
ii. a network communication module (IP) for connecting to a communications network (RC);
iii. a requesting module (E12) for requesting a secure service (S) from a server (KSK) of the communications network (RC);
iv. a reception module (E10, E14, E16) for receiving secure data relating to applications and/or data relating to at least one secure service (CDL, APS, DPS, 10T) originating from a server (SGG, SGL, KSK) of the communications network (RC);
v. a transmission module (E10, E14, E16) for transmitting, to the portable object, said secure data (CDL, ID, APS, DPS) via the serial communication module (USB, I3).

6. System for operating portable objects (OP) according to Claim 5, further comprising:
- a global management server (SGG) for the portable object on the communications network, possessing the access rights (K_SE) to the security element (SE) of the portable object (OP),
- at least one local management server (SGL) for at least one secure service (S) of the portable object, on the communications network, which is able to obtain the access rights (K_AP) to the application *(applet,* APS) relating to the secure service in the security element (SE) of the portable object (OP).

7. Method for implementing a near-field (NFC) secure service on a portable object (OP) according to Claim 1, comprising the following steps on the portable object:
- connecting the portable object to a terminal (PC) via its serial communication module (USB);
- receiving (E4, E6) a signal comprising applications (CDL, APS) and/or data (DPS) of said secure service (S) via the first serial interface of said serial communication module;
- converting said signal received into a signal adapted for the input/output contact of the security element;
- transmitting the adapted signal comprising applications and/or data of the secure service to the security element via the second interface of said serial communication module;
- installing the applications and/or the data of the secure service (CDL, APS, DPS, 10T) in the security element (SE) of the portable object (OP).

8. Method for managing services for a portable object (OP) according to Claim 1, connected to a terminal (PC) by the serial communication module (USB, I3), the terminal being in addition connected to a communications network (RC) by a network communication module (IP), the method comprising the following steps on the terminal:
- connecting the terminal to the portable object via its serial communication module (USB);
- requesting (E12) a near-field (NFC) secure service (S) from a server (KSK) of the communications network (RC);
- receiving (E10, E14, E16) the applications and/or the data of the secure service originating from a server (SGG, SGL, KSK) of the communications network;
- transmitting (E10, E14, E16), to the portable object, a signal comprising said applications and/or data (CDL, APS, DPS, 10T) of the secure service on the serial module of the portable object (USB, I3), said applications and/or data (CDL, APS, DPS, 10T) of the secure service being intended to be installed in the security element of the portable object.

9. Method for managing services according to Claim 8, wherein the applications and/or data of the secure service which are transmitted to the object comprise a generic application (CDL) for the secure services of the portable object (OP) and personalization data (DPS) for the secure service required.

10. Method for managing services according to Claim 8, wherein the applications and/or data of the secure service which are transmitted to the object comprise a secure application (APS) relating to the secure service (S) .

11. Computer program comprising code instructions for implementing the method for managing secure services for a portable object, in accordance with Claim 8, when it is executed by a processor of the terminal.

12. Computer program comprising code instructions for implementing the method for implementing a secure service on a portable object, in accordance with Claim 7, when it is executed by a processor of the portable object.
